# DEMANDE DE BREVET EUROPEEN

(11) **EP 1 939 792 A1**
(43) Date de publication de la demande: **02.07.2008**
(21) Numéro de dépôt: 06301302.3
(22) Date de dépôt: 28.12.2006
(51) Int. Cl.: G06K 19/073, H01Q 1/22, H01Q 7/00, H01Q 1/40

(54) **Procédé de réalisation de dispositifs de communication radiofréquence avec ou sans interrupteur de fonctionnement et dispositifs obtenus**

(71) Demandeur: GEMPLUS, 13420 Gémenos (FR)
(72) Inventeur: Lahoui, Nizar, 13400 AUBAGNE (FR); Seban, Frédérick, 13260 CASSIS (FR); Fidalgo, Jean-Christophe, 13420 GEMENOS (FR); Meridiano, Jean-Luc, 83170 TOURVES (FR)

(57) **Abrégé**

L'invention concerne un procédé de réalisation d'un dispositif de communication radiofréquence comportant un composant électronique, un circuit d'antenne associé au composant électronique et un interrupteur sur le circuit apte à fermer le circuit d'antenne;

Le procédé se distingue en ce qu'il comprend les étapes suivantes selon lesquelles :
- l'antenne (22) est réalisée avec une portion sous forme de circuit fermé (15, 17) dans une zone de réception de l'interrupteur,
- une zone d'interruption (I) du circuit d'antenne est crée sur ladite portion au moins par enlèvement de matière de l'antenne.

L'invention concerne également les dispositifs obtenus.

## Description

L'invention concerne un procédé de réalisation de dispositifs de communication radiofréquence avec ou sans interrupteur empêchant la lecture du dispositif à l'insu du porteur ainsi que les dispositifs obtenus.

Les dispositifs visés en premier lieu par l'invention sont des cartes à puce de type sans-contact ou hybride, des inserts comportant une antenne radiofréquence, le cas échéant pour tout support de circuit d'antenne comme des passeports électroniques. De tels dispositifs à communication radiofréquence dits transpondeurs, répondent pour la plupart à la norme ISO-IEC 14443.

Ce dispositif est destiné à fournir au porteur du transpondeur des moyens pour accepter et/ou refuser l'accès à des données contenues dans ledit transpondeur à un dispositif de lecture externe. En effet, l'un des problèmes soulevés par les transpondeurs sans contact, et notamment pour des applications sensibles telles que carte bancaire, porte-monnaie électronique, e-passeport, cartes d'identité, provient du fait que le transpondeur, peut être interrogé par un lecteur distant, et cette opération peut être effectuée alors même que le porteur n'en est pas conscient.

L'un des moyens permettant de résoudre cet inconvénient est l'utilisation d'un interrupteur. Ce moyen efficace reste non applicable à des antennes dont les lignes ne dépassent pas une certaine largeur (1mm); Il est donc difficile d'établir des contacts avec interrupteur sur des antennes en fil incrusté ou fil conducteur fixé par broderie ou équivalent. Or aujourd'hui, l'utilisation de tels fils conducteurs s'avère préféré pour être conforme aux différentes normes d'autant plus que les dispositifs sont de plus en plus réduits.

De tels fils conducteurs, généralement en cuivre, très fins, de l'ordre de 113 µm, et espacés de l'ordre de 700 µm pour constituer des spires d'antenne, permettent d'obtenir un facteur qualité élevé, par exemple supérieur à 44 contrairement à des antennes obtenues par dépôt de matière conductrice, notamment par sérigraphie d'encre conductrice. Le diamètre des spires peut être compris entre 200 µm à 300 µm.

De plus le changement de la technologie actuelle de fabrication de carte implique un changement de processus qui pourrait engendrer beaucoup de contraintes.

Le deuxième inconvénient du processus utilisé aujourd'hui dans les cartes avec bouton, est le changement du parcours ou agencement de l'antenne équipé d'une portion de circuit ouvert pour accueillir le bouton.

Le procédé actuel ne permet pas de tester le fonctionnement de la carte avant le rajout du bouton. De plus, il nous impose un nouvel agencement des spires d'antenne, un nouveau produit et donc des nouvelles contraintes de gestion de stock.

L'invention a pour objectif de résoudre les inconvénients précités et de permettre plus de flexibilité dans la production et le test de fonctionnement.

L'invention consiste dans son principe à ajouter en série au niveau de l'antenne, une boucle conductrice ou portion de circuit à distance des spires normales ou régulières; ainsi il est possible d'avoir des cartes ou inserts utilisables soit avec moyen d'inhibition / autorisation sous forme de bouton, soit comme simples cartes sans-contact standards.

Par ailleurs, l'ajout de portion conductrice à distance des spires n'a quasiment pas d'influence sur les propriétés radiofréquences de la carte réalisée.

Si on souhaite un bouton dont l'actionnement autorise la communication sur la carte, on procède alors à une étape d'usinage pour découvrir et accéder à une zone de contact et réaliser un circuit ouvert sur lequel s'interpose un interrupteur sous forme de bouton poussoir; Dans le cas contraire, dans une version simplifiée, sans interrupteur, la carte restera fonctionnelle indépendamment de l'autorisation du porteur.

La solution proposée ici offre l'avantage d'utiliser un bouton avec toutes les technologies actuelles de fabrication d'insert sans-contact ou ("inlay" en terminologie anglo-saxonne). La solution est compatible avec les procédés de fabrication des cartes à puce normalisées.

L'invention a donc pour premier objet un procédé de réalisation d'un dispositif de communication radiofréquence comportant un composant électronique, un circuit d'antenne associé au composant électronique et un interrupteur sur le circuit apte à fermer le circuit d'antenne;
Le procédé se distingue en ce qu'il comprend les étapes suivantes selon lesquelles :
- l'antenne est réalisée avec une portion sous forme de circuit fermé passant dans une zone de réception de l'interrupteur,
- une zone d'interruption du circuit d'antenne est crée sur ladite portion au moins par enlèvement de matière de l'antenne.

Ce procédé de fabrication a l'avantage de d'utiliser des inserts communs pour dispositif avec ou sans interrupteur.
Il permet aussi de tester électriquement l'insert ou de charger des données dans l'insert à un stade très avancé de la fabrication du dispositif. Alors que dans l'art antérieur, il faut attendre d'avoir le bouton et appuyer dessus pour permettre le fonctionnement.

L'invention a également pour objet un dispositif électronique de communication radiofréquence comportant un composant électronique, un circuit électrique d'antenne relié au composant électronique et un interrupteur disposé sur le circuit d'antenne et apte à fermer le circuit d'antenne par actionnement;
Le dispositif se distingue en ce qu'il comprend une zone d'interruption du circuit d'antenne réalisée par enlèvement de matière de l'antenne.

Cette structure de dispositif de communication radiofréquence avec interrupteur résulte de la mise en oeuvre du procédé de l'invention. Le dispositif comporte notamment au niveau de l'interrupteur des traces d'enlèvement de matière de l'antenne permettant de réaliser un circuit ouvert.

L'invention a également pour objet un dispositif présentant un support et un circuit d'antenne fermé ayant des spires avec deux extrémités de connexion pour une connexion à un composant électronique, disposées sur le support, avec un espacement inter-spires régulier;
Il se distingue en ce que l'antenne comporte une portion de spire longue de plus de 10 mm s'étendant entièrement à une distance d'au moins 10 mm de son parcours de bobine régulier et des extrémités de connexion à un composant électronique.

Cette structure présente l'avantage de convenir aussi bien pour réaliser un support à antenne commun utilisable avec ou sans interrupteur dont les dimensions préférées de largeur ou de diamètre sont de l'ordre de 10 mm.

D'autres particularités et avantages de l'invention apparaîtront à la lecture de la description faite à titre d'exemple non limitatif et en regard des dessins annexés sur lesquels :
- La figure 1 illustre schématiquement un transpondeur radiofréquence destiné à recevoir un interrupteur et comportant une antenne réalisée selon l'art antérieur;
- Le figure 2 illustre un transpondeur obtenu selon un mode de mise en oeuvre du procédé de l'invention;
- Le figure 3 illustre un autre transpondeur obtenu selon un second mode de mise en oeuvre du procédé de l'invention;
- La figure 4 illustre une coupe partielle de la figure 2 selon l'axe A-A au niveau de la zone (I) après une première étape d'enlèvement de matière de l'antenne;
- La figure 5 illustre une vue de dessus de la figure précédente;
- La figure 6 illustre une coupe partielle de la figure 2 selon l'axe A-A au niveau de la zone (I) après une seconde étape d'enlèvement de matière de l'antenne;
- La figure 7 illustre une vue de dessus de la figure précédente;
- La figure 8 illustre une vue en coupe de l'interrupteur disposé dans la cavité réalisée selon un mode de mise en oeuvre de l'invention;
- La figure 9 illustre une vue de dessus de la figure précédente.

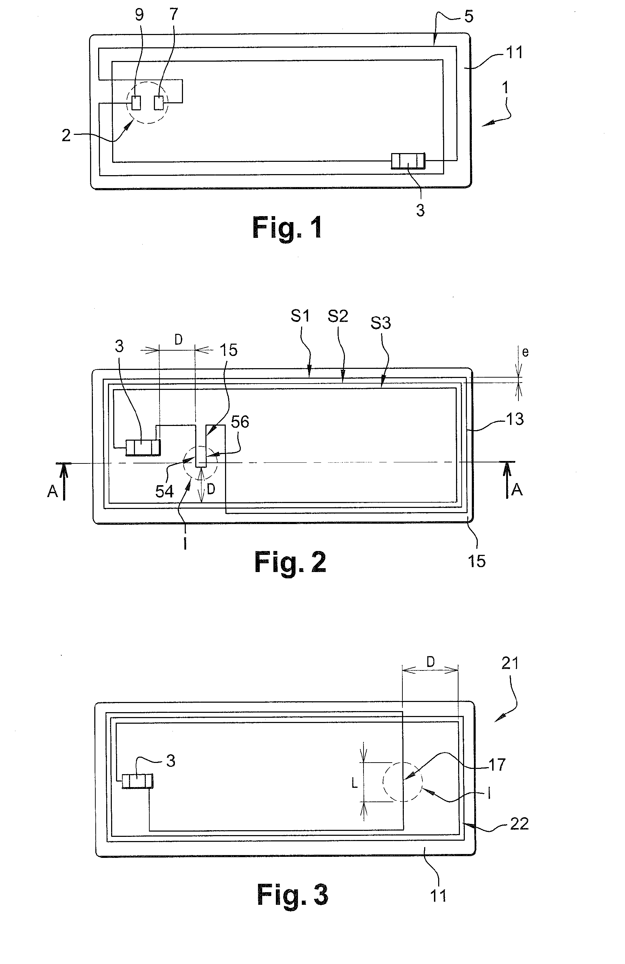

A la figure 1, on illustre la réalisation selon l'art antérieur d'un dispositif 1 de communication radiofréquence ou transpondeur qui comporte un composant électronique 3, un circuit d'antenne 5 associé au composant électronique 3 et une zone de réception Z d'un interrupteur sur le circuit apte à fermer le circuit d'antenne, ouvert à ce niveau.

Le circuit d'antenne comporte dès sa réalisation sur un support 11 deux ouvertures, respectivement pour la connexion au composant électronique et pour interagir avec un interrupteur (non représenté). Des plages de contact ou plots 7, 9 sont prévus sur la spire d'antenne au niveau de l'emplacement de l'interrupteur.

Ce dispositif a l'inconvénient de ne pas pouvoir fonctionner dans un état intermédiaire qui ne comporterait pas d'interrupteur fermant le circuit au niveau des contacts 7 et 8 et autorisant le fonctionnement.

La figure 2 illustre un dispositif radiofréquence sous forme d'insert pour carte à puce sans contact obtenu par un mode de mise en oeuvre du procédé de l'invention. Le procédé comporte une première étape dans laquelle l'antenne 13 est réalisée sous forme d'un circuit fermé (à l'exception des extrémités d'antenne connectées au composant électronique). L'antenne 13 est pour le moins en circuit fermé au niveau d'une zone (I) pouvant recevoir un interrupteur.

L'antenne présente 3 spires S1, S2, S3, ayant un espacement (e) régulier déterminé à 700 µm. Par espacement régulier on entend un espacement sensiblement constant entre les spires. Les spires forment ensemble une bobine ayant un parcours régulier avec un espacement inter-spires inférieur ou égal à 2 mm voire 3,5 mm. Les spires ont par exemple un diamètre compris entre 50 à 300 µm et sont gainées d'isolant.

Pour des raisons de simplicité de mise en oeuvre, les spires sont généralement disposées parallèlement et espacées régulièrement les unes par rapport aux autres mais il n'est pas exclu d'avoir des espacements sensiblement variables).

Dans l'exemple, le fil est incrusté dans un support polymère 11 par ultra sons. Mais il pourrait être réalisé autrement, par toute technique connue, telle la gravure et dépôt électrochimique, découpe de feuille métallique. Le support peut être en divers matériaux notamment synthétique et/ou comprendre des fibres en matière cellulosique tel du papier.

Selon un mode de mise en oeuvre ou réalisation préféré, l'antenne comporte une portion 15 située à distance des spires et qui ne suit pas un parcours normal ou régulier formé par les autres spires. De ce fait, la portion 15 s'écarte du parcours normal manifestement sans raison apparente, contrairement au fait, par exemple, de connecter un composant.

Cette portion d'antenne est dans l'exemple située en dehors de son parcours régulier formant la bobine et situé notamment en périphérie du support. La portion 15 est éloigné à la fois de son parcours régulier et des extrémités de connexion d'une distance D. Cette distance D est de préférence supérieure à 10 mm, voire plus de 15 mm ou de 20 mm. Mais elle pourrait être plus réduite selon l'encombrement de l'interrupteur, par exemple de 5 à 10 mm.

Dans l'exemple, la portion continue et fermée de spire a une longueur (L) de plus de 10 mm et se trouve entièrement éloignée de son espacement inter-spires (e). Dans l'exemple, une portion de plus de 20 mm de spire d'antenne est dérivée du parcours normal de bobine sous forme d'une boucle ou un "U". La carte présente le format ISO de 54 mm X 76 mm.

La portion 15 peut comporter deux branches (54, 56) en regard l'une de l'autre, par exemple en forme de "U" ou "V" et distantes d'une longueur comprise entre 1 et 10 mm selon la largeur de l'élément conducteur 19 de l'interrupteur.

Dans un autre mode de mise en oeuvre du procédé et de réalisation du dispositif 21 à la figure 3, l'antenne est sensiblement rectangulaire avec un petit côté 22 et la portion d'antenne 17 est parallèle à ce petit côté et s'étend transversalement en pleine surface du support 11 à distance D du bord latéral.

Le cercle en pointillé illustre un emplacement de zone (I) destinée à recevoir l'interrupteur ou à être usinée.

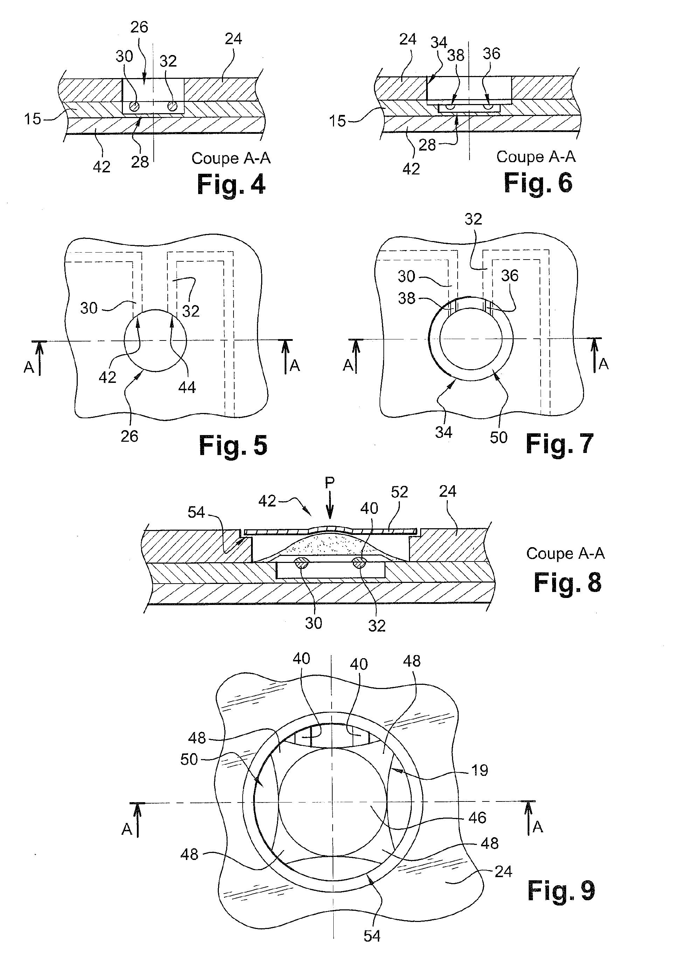

Sur les figures 4 et 5, selon une autre étape du procédé, une zone d'interruption du circuit d'antenne est crée sur la portion 17 de circuit d'antenne au moins par enlèvement de matière de l'antenne. Pour être ouvrir le circuit d'antenne, il faut que l'antenne au moins soit coupée entièrement. De préférence, la matière de l'antenne est enlevée de préférence avec de la matière du support située en dessous.

Cette étape est effectuée après connexion du composant de manière à pouvoir tester le dispositif au préalable. Mais, elle pourrait être réalisée avant si nécessaire, auquel cas subsisterait quand même l'avantage d'un support commun à deux utilisations différentes. Le composant dans l'exemple comprend un circuit intégré relié à l'antenne.

Dans l'exemple, on enlève la matière après disposition d'une couche de protection ou de revêtement 24 sur le circuit d'antenne et le composant 3.

Pour l'enlèvement de matière, on réalise un premier usinage d'une cavité 26 à travers la feuille de couverture de manière à créer un fond 28 de cavité en dessous de ladite portion ou plan d'antenne jusqu'à sectionner complètement la portion d'antenne pour former deux extrémités libres 30, 32 et donc un circuit ouvert à ce niveau. L'usinage comprend une opération de découpe notamment parmi le fraisage, poinçonnage ou perçage.

Aux figures 6 et 7, le procédé comprend en outre la réalisation d'un second usinage de cavité 34 plus large que la première 26 de manière à découvrir en surface les deux extrémités libres conductrices de ladite portion d'antenne et présenter des zones de contact 36, 38 orientées vers l'extérieur de la cavité. Ce second usinage est moins profond, il vient simplement dénuder radialement les spires à ce niveau, et de ce fait, elles présentent chacune une surface nue 36, 38 orientée vers l'entrée de la cavité.

Le cas échéant, de préférence, on dispose de la matière conductrice 40 sur les parties de spire d'antenne ainsi découvertes et usinées 36, 38 de manière d'une part faciliter le contact électrique ave un élément de court-circuit de l'interrupteur par une surépaisseur, mais aussi éviter éventuellement de l'oxydation ou une corrosion, qui empêcherait d'établir un bon contact électrique. La matière est de préférence élastique à température ambiante pour amortir le contact avec l'interrupteur et faciliter les contacts. Elle peut comprendre par exemple un polymère conducteur.

Ensuite, aux figures 8 et 9, selon une étape conforme à un mode de mise en oeuvre du procédé de l'invention, on interpose un interrupteur 42 sur le circuit d'antenne dans la zone de réception de l'interrupteur de manière à fermer le circuit d'antenne. Dans l'exemple, un élément élastique conducteur 19 de court-circuit est interposé de manière à venir court-circuiter ou mettre en contact lesdites deux extrémités libres conductrices 30, 32, sous l'effet d'un actionnement, ou exercice d'une pression P sur l'élément 19.

L'élément est ici une rondelle de type Belleville, comportant un dôme central 46, relié à quatre pieds 48 en forme de languette élastique. Les pieds reposent sur le plan 50 du second usinage, et sous l'effet d'une pression, les languettes se déforment élastiquement et le dôme en s'affaissant met en court-circuit ou en contact électrique les deux extrémités libres 30, 32 exposées dans la cavité.

D'autres éléments pour réaliser le contact et fermer le circuit notamment à ressort peuvent convenir.

Enfin, un opercule souple ou membrane 52, accessible de l'extérieur, est fixé, notamment par collage, sur un troisième plan 54 usiné au-dessus de l'élément conducteur, en obturant la cavité.

Dans une variante de réalisation du dispositif non représentée, l'antenne comporte, dans la zone à interrupteur, les spires disposées notamment par broderie au dessus de la surface de son support, par exemple fibreux ou tissé. Puis, on dispose une feuille de couverture comportant déjà une cavité par-dessus l'antenne de manière que les contacts 30, 32 soient localisés dans la cavité. Le cas échéant, la feuille pourrait déjà comporter la membrane ou opercule et/ou un élément de court-circuit, ce qui faciliterait l'assemblage de la partie support d'antenne avec une partie support de moyens d'interruption ou de court-circuit.

En alternative, le dispositif, la carte ou insert sont réalisés d'office avec le bouton couvrant une portion de circuit fermé ou continu et une ouverture du circuit est réalisée, par exemple, par perçage via la face arrière, face opposée à celle comportant le bouton. Une feuille finale de recouvrement vient obturer l'orifice ainsi crée.

Selon une autre variante, le sectionnement de l'antenne peut être réalisé par une première pression du bouton. A cet effet, le bouton comprendrait des moyens pour couper le circuit à un endroit fragilisé au préalable; par exemple, le circuit peut être dépourvu de support très localement à l'endroit fragilisé (par exemple, sur 2 X 2 mm), notamment en formant un pont au-dessus d'une perforation du support. Le bouton pourrait comprendre une tige ou lame pouvant coulisser dans la perforation pour sectionner le circuit.

L'étape d'ouverture peut être effectuée dans la zone de l'interrupteur; Toutefois, elle peut être effectuée en dehors de cette zone, par exemple par une prédécoupe dans le support ou en dehors d'une surface finie ou normalisée du support, en attente de sectionnement par pression des doigts ou autre moyen, la portion pouvant s'étendre par exemple jusqu'au bord du dispositif, ou un coin ou au delà d'un bord destiné à être définitif.

L'avantage de ces deux modes de réalisation est permettre un test de fonctionnement le plus tard possible notamment jusqu'à la première utilisation du dispositif.

Le dispositif électronique de communication radiofréquence obtenu comprend une zone d'interruption du circuit d'antenne réalisée par enlèvement de matière de l'antenne. Dans l'exemple, il s'agit d'une carte bancaire sans contact. Toutefois, il pourrait être un insert pour passeport ou carte d'identification ou autre.

Selon des caractéristiques de l'invention, le dispositif électronique de communication radiofréquence obtenu comprend une première cavité 26 avec un fond 28 qui s'étend à travers au moins une feuille de couverture 24 ; Le fond est disposé en dessous de ladite portion d'antenne ou d'un plan d'antenne.

Les deux extrémités libres 30, 32 de contact de l'antenne débouchent dans la cavité et présentent chacune une section sensiblement transversale ou oblique 42, 44 affleurant la paroi interne 26 de la cavité. Les extrémités présentent le même profil que la cavité et en l'occurrence circulaire ou cylindrique. L'intersection des fils avec la cavité est ici une surface cylindrique. Elle peut être plane si l'intersection correspond à un plan (cas d'une cavité parallélépipédique).

D'autre part, on voit que le dispositif de l'invention des figures 2 ou 3, peut servir à deux utilisations avec ou sans interrupteur; l'insert comporte sur un support 15, un circuit d'antenne fermé avec des spires ayant deux extrémités de connexion pour une connexion à un composant électronique.

La connexion du composant peut être réalisée sur l'insert 21 puis cet insert peut être utilisé ainsi ou peut subir d'autres étapes de finition comme une lamination de feuilles de recouvrement et/ou décoration 42 pour former une carte à puce sans-contact à antenne ou même de type contact et sans-contact avec un module spécifique comportant des plages de contact affleurant la surface du corps de carte en plus des contacts de connexion, à l'antenne.

L'invention peut s'appliquer à tout circuit conducteur dans lequel on ouvre le circuit mécaniquement à l'endroit de l'interrupteur après réalisation du circuit en continu à cet endroit. Ainsi, le circuit peut former autre chose qu'une bobine d'antenne, ou piste de raccordement d'antenne.

Par ailleurs, dans l'exemple de la figure 2, l'extrémité de boucle se trouve dans la cavité mais dans une variante, cette extrémité pourrait être localisée en dehors de la cavité ou de la zone de l'interrupteur, voire en dehors de la surface standard de la carte. Par conséquent la boucle serait ouverte à distance de l'interrupteur.

On aurait dans ce cas deux brins continus de la boucle passant dans la cavité, les deux brins de circuit étant agencés de manière à coopérer avec l'interrupteur pour la fermeture du circuit.

Dispositif selon la revendication 6, caractérisé en ce la zone d'interruption est localisée en dehors de la zone de l'interrupteur dans laquelle passent deux brins (54, 56) de circuit agencés de manière à coopérer avec l'interrupteur.

## Revendications

1. Procédé de réalisation d'un dispositif de communication radiofréquence comportant un composant électronique, un circuit d'antenne associé au composant électronique et un interrupteur sur le circuit apte à fermer le circuit d'antenne,
**caractérisé en ce qu'**il comprend les étapes suivantes selon lesquelles :
- l'antenne (22) est réalisée avec une portion sous forme de circuit fermé (15, 17) passant dans une zone de réception de l'interrupteur,
- une zone d'interruption (I) du circuit d'antenne est crée sur ladite portion au moins par enlèvement de matière de l'antenne.

2. Procédé selon la revendication précédente, **caractérisé en ce que** l'enlèvement de matière de l'antenne est effectué après connexion du composant (3).

3. Procédé selon la revendication 1, **caractérisé en ce que** l'enlèvement de matière est effectué après disposition d'une couche de revêtement (24) sur le circuit d'antenne (22) et composant (3).

4. Procédé selon la revendication précédente, **caractérisé en ce que** pour l'enlèvement de matière, un premier usinage d'une cavité (26) est effectué à travers la feuille de couverture (24) de manière:
- à créer un fond de cavité (28) en dessous de ladite portion ou plan inférieur d'antenne,
- sectionner complètement la portion d'antenne (15, 17) pour former deux extrémités libres.

5. Procédé selon la revendication précédente, **caractérisé en ce qu'**il comprend en outre les étapes suivantes selon lesquelles :
- un second usinage de cavité (34) plus large que la première (26) est effectué de manière à découvrir en surface les deux extrémités libres conductrices (30, 32) de ladite portion d'antenne et présenter des surfaces de contact orientée vers l'extérieur de la cavité,
- un élément conducteur de court-circuit élastique (19) est disposé de manière à venir court-circuiter lesdites deux extrémités libres conductrices,
- un opercule souple (52) est fixé au-dessus de l'élément conducteur en obturant la cavité et étant accessible de l'extérieur.

6. Dispositif électronique de communication radiofréquence comportant un composant électronique (3), un circuit électrique d'antenne (22) relié au composant électronique et un interrupteur (42) disposé sur le circuit d'antenne et apte à fermer le circuit d'antenne sur actionnement,
**caractérisé en ce qu'**il comprend une zone d'interruption (26) du circuit d'antenne réalisée par enlèvement de matière de l'antenne.

7. Dispositif électronique de communication radiofréquence selon la revendication précédente **caractérisé en ce qu'**il comprend une première cavité (26) ayant un fond (28), s'étendant à travers une feuille de couverture (24), ledit fond étant disposé en dessous de ladite portion d'antenne ou d'un plan d'antenne inférieur, et présentant deux extrémités libres (30, 32) dont la section (42, 44) affleure la paroi de la cavité.

8. Dispositif présentant un support et un circuit d'antenne fermé ayant des spires avec deux extrémités de connexion pour une connexion à un composant électronique, lesdites spires étant disposées sur le support (11), avec un espacement inter-spires régulier (e),
**caractérisé en ce que** l'antenne comporte une portion de spire (15, 17) longue de plus de 10 mm s'étendant entièrement à distance d'au moins 10 mm de son parcours régulier de bobine et à distance des extrémités de connexion à un composant.

9. Dispositif selon la revendication précédente, **caractérisé en ce que** ladite portion (15, 17) comporte deux branches (54, 56) distantes d'une distance comprise entre 1 et 10 mm.

10. Dispositif selon la revendication 6, **caractérisé en ce** la zone d'interruption est localisée en dehors de la zone de l'interrupteur dans laquelle passent deux brins de circuit (54, 46) agencés de manière à coopérer avec l'interrupteur.
